# EUROPEAN PATENT APPLICATION

(11) **EP 1 162 715 A1**
(43) Date of publication of application: **12.12.2001**
(21) Application number: 01113172.9
(22) Date of filing: 30.05.2001
(51) Int. Cl.: H02K 5/04, H02K 1/17

(54) **Dynamo-electric machine and outer yoke thereof**

(30) Priority: 02.06.2000 JP 2000165773
(71) Applicant: ASMO CO., LTD., Kosai-city, Shizuoka-pref. 431-0493 (JP)
(72) Inventor: Ueda, Yasushi, Kosai-city, Shizuoka-pref., 431-0493 (JP)
(74) Representative: Leson, Thomas Johannes Alois, Dipl.-Ing.

(57) **Abstract**

An outer yoke (7) of a dynamo-electric machine is made from at least one piece of plate material that has at least one pair of tongue (8) and groove (9). The tongue (8) is formed at one end of the plate material, and the groove (9) is formed at the other end of the plate material in opposing relationship to the tongue (8). The outer yoke (7) is formed into a cylindrical shape by engaging the tongue (8) with the groove (9) while the plate material is rolled into the cylindrical shape. A rotor (3) and the inner yoke (5) constitute a dynamo-electric machine main body (2). The dynamo-electric machine main body (2) is fitted within the outer yoke (7) such that the outer yoke (7) is expanded radially outwardly by the dynamo-electric machine main body (2) to secure the outer yoke (7) to the inner yoke (5) in tightly contacting relationship therewith.

## Description

The present invention relates to a dynamo-electric machine having an outer yoke that ensures a required magnetic property of the dynamo-electric machine and also to the outer yoke itself.

With reference to FIG. 6, one example of a motor yoke is disclosed as a motor casing in German Patent Publication No. 2264771. The casing 51 includes a casing base plate 52 and a casing side wall 53. The casing side wall 53 is manufactured from one piece of strip material that is processed into a cylindrical shape by rolling the strip material. More specifically, protruding swallowtail-shaped tongues 54 are formed along one side edge 53a of the casing side wall 53, and grooves 55 are formed along the other side edge 53b of the casing side wall 53 by notching. The tongues 54 are press fitted into the corresponding grooves 55, and the tongues 54 and the grooves 55 are then pressed together to make secure connections therebetween.

In general, a housing of a motor has permanent magnets secured to an inner peripheral surface of the housing and acts as a yoke. The yoke provides a passage of a magnetic flux generated, for example, by the permanent magnets. In order to achieve a stronger magnetic property, a wall thickness of the yoke can be increased. Alternatively, an outer yoke can be fitted around the housing (hereinafter called inner yoke) of the motor.

The process of manufacturing the cylindrical casing 51 disclosed in the prior art can be applied in manufacturing of the outer yoke. However, in order to tightly fit the inner yoke within the cylindrical outer yoke, precise manufacturing control of relative dimensions of the outer yoke and the inner yoke is required. Because of this requirement, a manufacturing efficiency of the motor is disadvantageously limited. Furthermore, an unnecessary portion of the motor, which does not constitute the passage of the magnetic flux in the magnetic circuit of the motor, is also covered by the outer yoke, resulting in an increase in a total weight of the motor.

The present invention addresses the above disadvantages. Thus, it is an objective of the present invention to provide an outer yoke of a dynamo-electric machine which tightly contacts an inner yoke of the dynamo-electric machine without requiring precise manufacturing control of relative dimensions of the outer yoke and the inner yoke and which also minimizes an increase in a total weight of the dynamo-electric machine.

It is another objective of the present invention to provide a dynamo-electric machine having such an outer yoke.

To achieve the objectives of the present invention, there is provided a dynamo-electric machine including a rotor, an inner yoke and an outer yoke. The inner yoke has a plurality of magnets secured to an inner peripheral surface of the inner yoke in such a manner that the magnets oppose an outer peripheral surface of the rotor. The outer yoke is fitted around the inner yoke. The outer yoke is made from at least one piece of plate material that has at least one pair of tongue and groove. The tongue is formed at one end of the plate material. The groove is formed at the other end of the plate material in opposing relationship to the tongue. The outer yoke is formed into a cylindrical shape by engaging the tongue with the groove while the plate material is rolled into the cylindrical shape. The rotor and the inner yoke constitute a dynamo-electric machine main body. The dynamo-electric machine main body is fitted within the outer yoke such that the outer yoke is expanded radially outwardly by the dynamo-electric machine main body to secure the outer yoke to the inner yoke in tightly contacting relationship therewith.

Furthermore, there is also provided an outer yoke for a dynamo-electric machine having a housing. The outer yoke is made from at least one piece of plate material that has at least one pair of tongue and groove. The tongue is formed at one end of the plate material. The groove is formed at the other end of the plate material in opposing relationship to the tongue. The outer yoke is formed into a cylindrical shape by engaging the tongue with the groove while the plate material is rolled into the cylindrical shape. The outer yoke is formed to be expanded radially outwardly when the housing of the dynamo-electric machine is fitted within the outer yoke to secure the outer yoke to the housing of the dynamo-electric machine in tightly contacting relationship therewith.

The invention, together with additional objectives, features and advantages thereof, will be best understood from the following description, the appended claims and the accompanying drawings in which:
FIG. 1 is a side view of a dynamo-electric machine according to one embodiment of the present invention;
FIG. 2 is a diagram showing insertion of a motor main body into an outer yoke;
FIG. 3 is a plan view showing the outer yoke before it is rolled into a cylindrical shape;
FIG. 4 is a cross-sectional view of the dynamo-electric machine, showing a flow of magnetic flux;
FIGS. 5A to 5C are diagrams indicating various different types of tongue and groove; and
FIG. 6 is a side view of a casing according to a prior art.

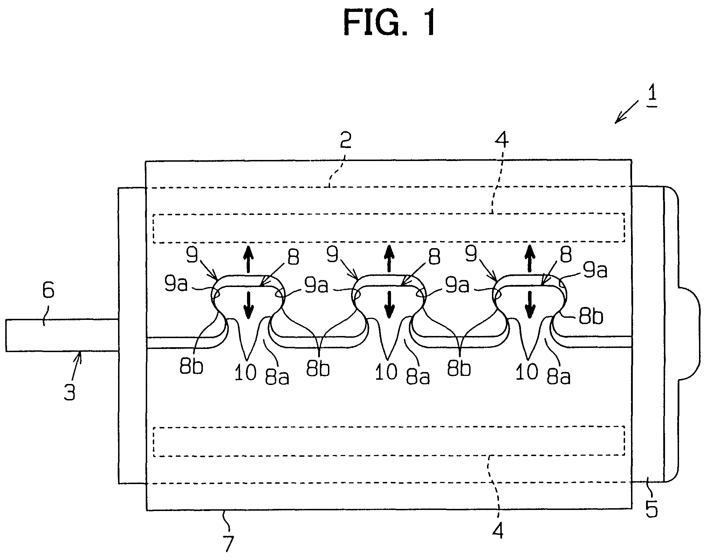

A dynamo-electric machine according to one embodiment of the present invention will be described with reference to FIGS. 1 to 3.

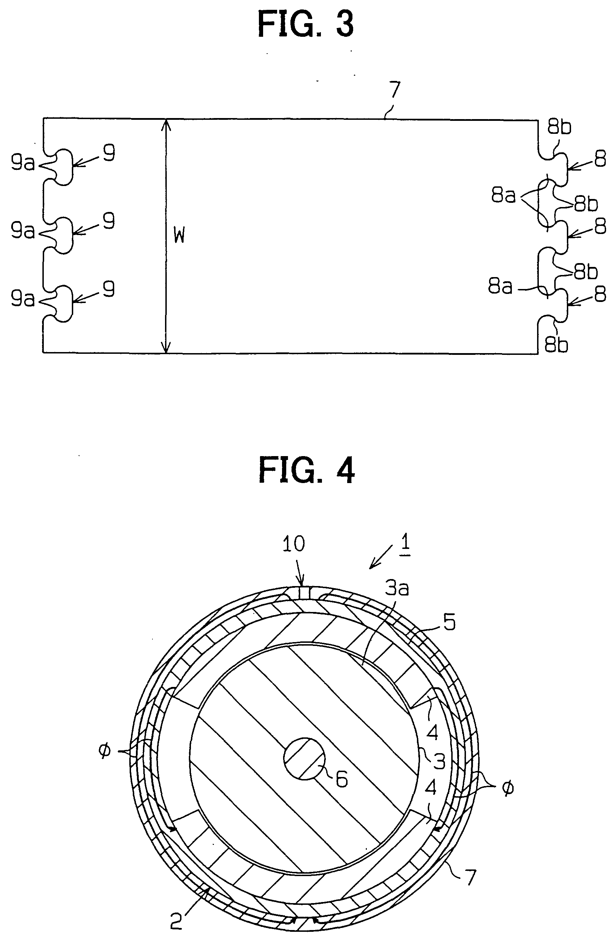

As shown in FIGS. 1 and 4, the dynamo-electric machine 1 includes a motor main body 2 acting as a dynamo-electric machine main body. The motor main body 2 includes an inner yoke (housing) 5 and an armature 3 acting as a rotor. The inner yoke 5 has a pair of magnets (permanent magnets) 4 secured to an inner peripheral surface of the inner yoke 5. The armature 3 includes a rotatable shaft 6, a laminated core 3a and a commutator (not shown). The rotatable shaft 6 extends out from the inner yoke 5. The laminated core 3a is secured around an outer peripheral surface of the rotatable shaft 6 within the inner yoke 5. The commutator (not shown) is engaged with a predetermined portion of the rotatable shaft 6. Power supply brushes (not shown) are mounted around the commutator in such a manner that the power supply brushes contact the commutator. An outer yoke 7 is fitted around the motor main body 2 in such a manner that the outer yoke 7 tightly contacts an outer peripheral surface of the motor main body 2.

Before the outer yoke 7 is rolled into a cylindrical shape shown in FIG. 4, the outer yoke 7 is a piece of flat plate-like strip material, as shown in FIG. 3. The flat plate-like strip material has a width W that is substantially the same as an axial length of each permanent magnet 4 secured to the inner yoke 5. A plurality (three in this embodiment) of protruding tongues 8 are formed along one end of the outer yoke 7. A corresponding number of grooves 9 are formed along the other end of the outer yoke 7 in opposing relationship to the corresponding tongues 8 by notching the plate-like strip material. A base portion 8a of each tongue 8 has a reduced width. Furthermore, each tongue 8 has a predetermined shape (swallowtail-shape) in which a width between opposing engaging surfaces 8b, which engage opposing engaging surfaces 9a of the corresponding groove 9, increases from the base portion 8a toward a distal end of the tongue 8.

Each groove 9 has a predetermined shape in which a width of each groove 9 decreases from its base toward its mouth. The shape of each groove 9 is substantially homothetic (or similar) to the shape of the corresponding tongue 8. That is, the width between the opposing engaging surfaces 9a of each groove 9, which engage the opposing engaging surfaces 8b of the corresponding tongue 8, decreases toward the mouth of the groove 9. A size of each groove 9 is slightly larger than a size of the corresponding tongue 8, so that a predetermined clearance is formed between the tongue 8 and the corresponding groove 9 when the tongue 8 is engaged with the groove 9.

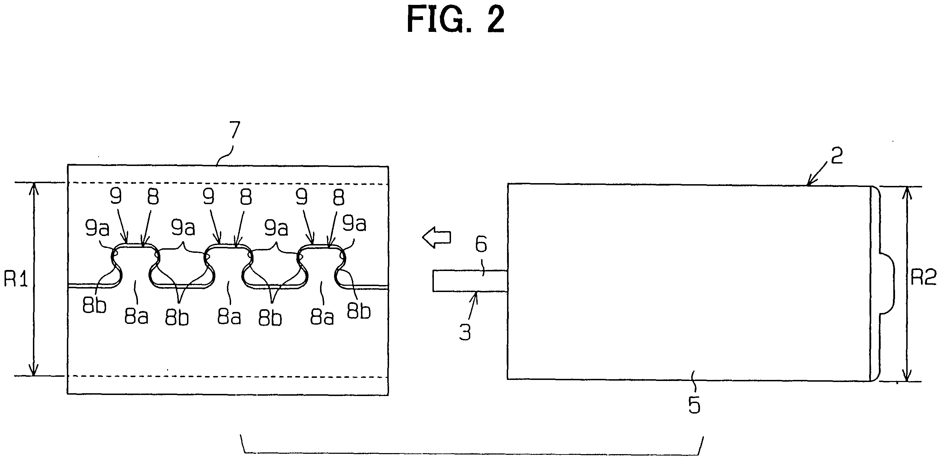

The outer yoke 7 is processed into the cylindrical shape shown in FIG. 2 by rolling the above-described plate-like strip material. Then, the tongues 8 are temporarily engaged with the corresponding grooves 9 to maintain the cylindrical shape of the outer yoke 7. The phrase "temporarily engaged" refers to a state of the tongue 8 where the tongue 8 is simply received within the corresponding groove 9, so that an inner diameter of the outer yoke 7 has not been fixed yet. Furthermore, as clearly shown in FIG. 2, at this stage, a space may be present between each shoulder (located on the interior side of the mouth of the groove 9) of the groove 9 and an opposing surface of the corresponding tongue 8 such that the tongue 8 can be moved slightly in a direction away from the groove 9 without deforming a connection 10 (FIG.1) between the tongue 8 and the groove 9. For instance, such a space allows easy insertion of the motor main body 2 into the outer yoke 7. As one way of providing such a space, the plate-like strip material may be first rolled into a spiral cylinder and then may be pulled back to temporarily engage the tongues 8 with the corresponding grooves 9. An inner diameter R1 of the outer yoke 7 in the temporarily engaged state is selected such that the inner diameter R1 of the outer yoke 7 is slightly smaller than an outer diameter R2 of the motor main body 2.

An assembling procedure of the motor main body 2 into the outer yoke 7 will be described.

The flat plate-like strip material shown in FIG. 3 is first rolled to temporarily engage the tongues 8 with the corresponding grooves 9, so that the outer yoke 7 is formed into the cylindrical shape shown in FIG. 2, as described above. Then, the motor main body 2 is inserted into this outer yoke 7. During the insertion of the motor main body 2 into the outer yoke 7, the motor main body 2 is positioned with respect to the outer yoke 7 such that the connections 10 between the tongues 8 and the grooves 9 are located substantially at a circumferential center of one of the permanent magnets 4, as shown in FIG 4. A magnetic flux generated by the permanent magnets 4 flows as indicated by "Φ" in FIG. 4. The magnetic flux Φ is minimum at the circumferential center of the permanent magnet 4, and the magnetic flux Φ is increased toward the circumferential ends of the permanent magnet 4. Thus, although a gap is formed between each tongue 8 and the corresponding groove 9, the gap is arranged at the described position where the magnetic flux Φ is minimum. As a result, there is substantially no magnetic loss induced by this arrangement in the dynamo-electric machine 1.

During the insertion of the motor main body 2 into the outer yoke 7, the connections 10 are slightly deformed, so that the outer yoke 7 is expanded radially outwardly in such a manner that the inner diameter of the outer yoke 7 is increased to substantially correspond to the outer diameter R2 of the motor main body 2. At the same time, each tongue 8 and the corresponding groove 9 are respectively pulled in a direction (indicated with an arrow in FIG.1) toward which the inner diameter of the outer yoke 7 is increased. Thus, the tongues 8 are tightly engaged (stationary engagement) with the corresponding grooves 9. As a result, the motor main body 2 is received within the outer yoke 7 while the inner yoke 5 tightly contacts the outer yoke 7.

Thus, the inner diameter of the outer yoke 7 is increased, and thereby the connections 10 between the tongues 8 and the grooves 9 are slightly deformed, enhancing the engagement between the tongues 8 and the grooves 9. In this way, the motor main body 2 is fitted within the outer yoke 7 in such a manner that the outer yoke 7 tightly contacts the motor main body 2. As a result, the flow of the magnetic flux generated, for example, by the armature 3 or the permanent magnets 4 is facilitated, and the required magnetic property of the dynamo-electric machine 1 can be achieved without requiring precise manufacturing control of the relative sizes and shapes of the inner yoke 5 and the outer yoke 7. Furthermore, an error in size and/or shape of the inner yoke 5 and/or of the outer yoke 7 can be compensated by the expansion of the outer yoke 7 when the motor main body is received within the outer yoke 7, so the manufacturing efficiency of the outer yoke 7 and thereby the manufacturing efficiency of the dynamo-electric machine 1 are improved.

Alternative to this arrangement, a wall thickness of the inner yoke 5 can be increased in order to improve the magnetic property of the dynamo-electric machine 1. However, the increase in the wall thickness of the entire inner yoke 5 causes an increase in the weight of the dynamo-electric machine 1. Contrary to this, in accordance with the above embodiment, since the width W (FIG. 3) of the outer yoke 7 is substantially the same as the axial length of the permanent magnet 4, it is only required to increase the wall thickness of the necessary portion. Thus, although the magnetic property of the dynamo-electric machine 1 is improved, the entire weight of the dynamo-electric machine 1 is minimized.

The present embodiment can provide the following advantages.
(1) Without requiring the precise manufacturing control of the relative dimensions and shapes of the inner yoke 5 and the outer yoke 7, the motor main body 2 can be fitted within the outer yoke 7 while making close contact therewith. Thus, the required magnetic property of the dynamo-electric machine 1 is attained, and also the manufacturing efficiency of the outer yoke 7 and thereby the manufacturing efficiency of the dynamo-electric machine 1 can be improved.
(2) An appropriate width (axial dimension) W of the outer yoke 7 can be set. Thus, by making the width W of the outer yoke 7 substantially equal to the length of the permanent magnet 4, the wall thickness is increased only in the region that constitutes part of the passage of the magnetic flux. As a result, although the magnetic property of the dynamo-electric machine 1 is improved, an increase in the entire weight of the dynamo-electric machine 1 is minimized.
(3) Each engaging surface 8b and the corresponding engaging surface 9a are made to facilitate deformation of the other one. Furthermore, the tongues 8 are engaged with the corresponding grooves 9 in such a manner that the connections 10 slightly deform when the outer yoke 7 is expanded radially outwardly. Thus, the engagements between the tongues 8 and the grooves 9 are further enhanced, and thereby the tight contact between the outer yoke 7 and the motor main body 2 is achieved.
(4) Each tongue 8 can be temporarily engaged with the corresponding groove 9 without difficulty because of the clearance or space provided between the tongue 8 and the corresponding groove 9.
(5) The motor main body 2 is received within the outer yoke 7 in such a manner that the connections 10 are located at the circumferential center of the one permanent magnet 4 on the outer peripheral side of the permanent magnet 4. Thus, although the gaps are present in the outer yoke 7, the loss of the magnetic property is minimized.
(6) The shape of each tongue 8 is substantially homothetic to the shape of each groove 9, so that the tongue 8 is not easily disengaged from the corresponding groove 9 when the tongue 8 is temporarily engaged with the groove 9.

The invention is not limited to the above-described embodiment and can be modified as follows.

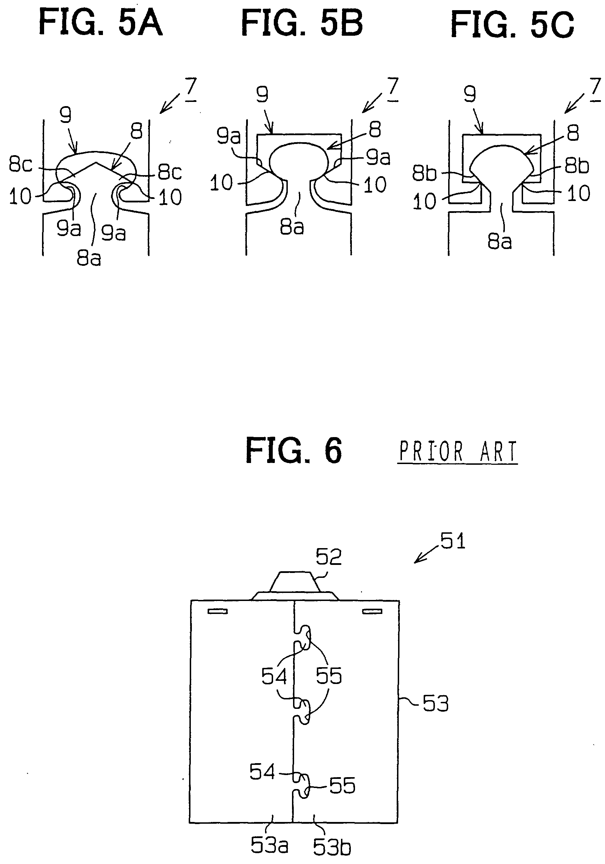

The shape of each tongue 8 is not necessarily homothetic to the shape of each groove 9. For instance, various forms depicted in FIGS. 5A to 5C can be alternatively used. More specifically, with reference to FIG. 5A, the tongue 8 has a generally triangular shape, and the groove 9 has an ellipsoidal shape. In this instance, a shape of each engaging surface 9a of the groove 9 facilitates the deformation of each connection 10, so that a distal end of each protrusion 8c of the tongue 8 is strongly engaged with the groove 9. In FIG. 5B, the tongue 8 has a generally ellipsoidal shape, and the groove 9 is tapered in such a manner that a width of the groove 9 decreases toward a mouth of the groove 9. In this case, the deformation of each connection 10 is facilitated by the engaging surfaces 9a of the groove 9, so that the tongue 8 is strongly engaged with the groove 9. In FIG. 5C, the tongue 8 has a generally fan shape, and the groove 9 has a generally rectangular shape. In this case, the deformation of each connection 10 is facilitated by the engaging surfaces 8b of the tongue 8, so that the tongue 8 is strongly engaged with the groove 9. In the above instances, each tongue 8 protrudes from an edge of the one end of the plate material or the outer yoke 7. When the tongue 8 and the groove 9 are engaged with each other, the tongue 8 and the groove 9 are configured such that at least one of the tongue 8 and the groove 9 have a decreasing width that decreases toward the edge of the one end of the plate material. In sum, the tongue 8 and the groove 9 can have any shapes as long as the inner diameter of the outer yoke 7 is enlarged when the motor main body is received within the outer yoke 7 so as to strengthen the engagement between the tongue 8 and the groove 9.

In the above-described embodiment, the one end of the outer yoke 7 has only the tongues 8, and the other end of the outer yoke 7 has only the grooves 9. However, each tongue 8 and each groove 9 can be formed in either one of the opposing ends of the outer yoke 7. For instance, the tongue 8 and the groove 9 can be alternately arranged along the one end of the outer yoke 7, and the corresponding groove 9 and the tongue 8 can be alternately arranged along the other end of the outer yoke 7.

The number of the tongues 8 is not limited to three and can be any number. However, in such a case, the number of the grooves 9 should be the same as that of the tongues 8.

The outer yoke 7 is made from the one piece of strip material. However, two or more strip materials can be processed to form one cylinder.

The dynamo-electric machine 1 needs not be cylindrical. For instance, the dynamo-electric machine 1 can have an oblate shape, such as, an oblate cylindrical shape having diametrically opposing flat surfaces. In such a case, the outer yoke is formed from two strip materials and shaped into the oblate shape corresponding to the shape of the motor.

Additional advantages and modifications will readily occur to those skilled in the art. The invention in its broader terms is therefore, not limited to the specific details, representative apparatus, and illustrative examples shown and described.

An outer yoke (7) of a dynamo-electric machine is made from at least one piece of plate material that has at least one pair of tongue (8) and groove (9). The tongue (8) is formed at one end of the plate material, and the groove (9) is formed at the other end of the plate material in opposing relationship to the tongue (8). The outer yoke (7) is formed into a cylindrical shape by engaging the tongue (8) with the groove (9) while the plate material is rolled into the cylindrical shape. A rotor (3) and the inner yoke (5) constitute a dynamo-electric machine main body (2). The dynamo-electric machine main body (2) is fitted within the outer yoke (7) such that the outer yoke (7) is expanded radially outwardly by the dynamo-electric machine main body (2) to secure the outer yoke (7) to the inner yoke (5) in tightly contacting relationship therewith.

## Claims

1. A dynamo-electric machine comprising:
a rotor (3);
an inner yoke (5) having a plurality of magnets (4) secured to an inner peripheral surface of said inner yoke (5) in such a manner that said magnets (4) oppose an outer peripheral surface of said rotor (3); and
an outer yoke (7) fitted around said inner yoke (5), said dynamo-electric machine being **characterized in that**:
said outer yoke (7) is made from at least one piece of plate material that has at least one pair of tongue (8) and groove (9), said tongue (8) being formed at one end of said plate material, and said groove (9) being formed at the other end of said plate material in opposing relationship to said tongue (8), said outer yoke (7) being formed into a cylindrical shape by engaging said tongue (8) with said groove (9) while said plate material is rolled into said cylindrical shape; and
said rotor (3) and said inner yoke (5) constitute a dynamo-electric machine main body (2), said dynamo-electric machine main body (2) being fitted within said outer yoke (7) such that said outer yoke (7) is expanded radially outwardly by said dynamo-electric machine main body (2) to secure said outer yoke (7) to said inner yoke (5) in tightly contacting relationship therewith.

2. A dynamo-electric machine according to claim 1, **characterized in that**:
said tongue (8) is formed such that said tongue (8) is displaceable within said groove (9) with respect to said groove (9); and
said tongue (8) and said groove (9) are formed such that said tongue (8) and said groove (9) are more tightly engaged with each other when said outer yoke (7) is expanded radially outwardly.

3. A dynamo-electric machine according to claim 1 or 2, **characterized in that**:
said tongue (8) protrudes from an edge of said one end of said plate material; and
when said tongue (8) and said groove (9) are engaged with each other, said tongue (8) and said groove (9) are configured such that at least one of said tongue (8) and said groove (9) have a decreasing width that decreases toward said edge of said one end of said plate material.

4. A dynamo-electric machine according to any one of claims 1 to 3, **characterized in that**:
a size of said groove (9) is slightly larger than a size of said tongue (8); and
a clearance is present between said tongue (8) and said groove (9) when said tongue (8) is engaged with said groove (9).

5. A dynamo-electric machine according to any one of claims 1 to 4, **characterized in that** a shape of said tongue (8) is substantially homothetic to a shape of said groove (9).

6. A dynamo-electric machine according to any one of claims 1 to 5, **characterized in that** a connection (10) between said tongue (8) and said groove (9) is placed substantially at a circumferential center of one of said plurality of magnets (4).

7. A dynamo-electric machine according to any one of claims 1 to 6, **characterized in that** said outer yoke (7) is constructed such that a space is present between said tongue (8) and said groove (9) when said dynamo-electric machine main body (2) is not fitted within said outer yoke (7), said space being substantially eliminated when said dynamo-electric machine main body (2) is fitted within said outer yoke (7).

8. A dynamo-electric machine according to any one of claims 1 to 7, **characterized in that** said connection (10) between said tongue (8) and said groove (9) is slightly deformed when said dynamo-electric machine main body (2) is fitted within said outer yoke (7).

9. An outer yoke for a dynamo-electric machine (1) having a housing (5), said outer yoke being **characterized in that**:
said outer yoke (7) is made from at least one piece of plate material that has at least one pair of tongue (8) and groove (9), said tongue (8) being formed at one end of said plate material, and said groove (9) being formed at the other end of said plate material in opposing relationship to said tongue (8), said outer yoke (7) being formed into a cylindrical shape by engaging said tongue (8) with said groove (9) while said plate material is rolled into said cylindrical shape; and
said outer yoke (7) is formed to be expanded radially outwardly when said housing (5) of said dynamo-electric machine (1) is fitted within said outer yoke (7) to secure said outer yoke (7) to said housing (5) of said dynamo-electric machine (1) in tightly contacting relationship therewith.

10. An outer yoke according to claim 9, **characterized in that**:
said tongue (8) is formed such that said tongue (8) is displaceable within said groove (9) with respect to said groove (9); and
said tongue (8) and said groove (9) are formed such that said tongue (8) and said groove (9) are more tightly engaged with each other when said outer yoke (7) is expanded radially outwardly.

11. An outer yoke according to claim 9 or 10, **characterized in that**:
said tongue (8) protrudes from an edge of said one end of said plate material; and
when said tongue (8) and said groove (9) are engaged with each other, said tongue (8) and said groove (9) are configured such that at least one of said tongue (8) and said groove (9) have a decreasing width that decreases toward said edge of said one end of said plate material.

12. An outer yoke according to any one of claims 9 to 11, **characterized in that**:
a size of said groove (9) is slightly larger than a size of said tongue (8); and
a clearance is present between said tongue (8) and said groove (9) when said tongue (8) is engaged with said groove (9).

13. An outer yoke according to any one of claims 9 to 12, **characterized in that** a shape of said tongue (8) is substantially homothetic to a shape of said groove (9).

14. An outer yoke according to any one of claims 9 to 13, **characterized in that** said outer yoke (7) is constructed such that a space is present between said tongue (8) and said groove (9) when said housing (5) of said dynamo-electric machine (1) is not fitted within said outer yoke (7), said space being substantially eliminated when said housing (5) of said dynamo-electric machine (1) is fitted within said outer yoke (7).

15. An outer yoke according to any one of claims 9 to 14, **characterized in that** a connection (10) between said tongue (8) and said groove (9) is slightly deformed when said housing (5) of said dynamo-electric machine (1) is fitted within said outer yoke (7).
